# EUROPEAN PATENT SPECIFICATION

(11) **EP 0 903 280 B1**
(45) Date of publication and mention of the grant of the patent: **28.11.2001**
(21) Application number: 97116573.3
(22) Date of filing: 23.09.1997
(51) Int. Cl.: B62D 5/083

(54) **Rack-pinion type power steering apparatus**
Zahnstangenservolenkung
Direction à crémaillère assistée.

(43) Date of publication of application: 24.03.1999
(73) Proprietor: BOSCH BRAKING SYSTEMS Co., Ltd., Tokyo 150-0002 (JP)
(72) Inventor: Sonoda, Hirotetsu c/o Matsuyama Plant J.K.Co, Ltd, Higashimatsuyama-shi, Saitama-ken (JP); Fukushima, Tatsuya, c/o Matsuyama Plant J.K.Co,Ltd, Higashimatsuyama-shi, Saitama-ken (JP)
(74) Representative: Maser, Jochen, Dipl.-Ing.

(56) References cited:
- EP-A- 0 059 657
- EP-A- 0 082 027
- FR-A- 2 528 786
- JP-U- 55 114 763
- JP-U- 55 114 764
- US-A- 4 799 514
- PATENT ABSTRACTS OF JAPAN vol. 010, no. 365 (M-542), 6 December 1986 & JP 61 160362 A (NISSAN MOTOR CO LTD), 21 July 1986,

## Description

### Background of the Invention

The present invention relates to a rack-pinion type power steering apparatus and, more particularly, to a rack-pinion type power steering apparatus having a rotary type channel selector valve (rotary valve).

A rack-pinion type power steering apparatus is advantageous in that it is lightweight, has a comparatively simple arrangement, is excellent in steering performance, and requires a small space when being incorporated in a vehicle, and is accordingly among those which are often employed as a power steering apparatus. Although apparatuses having various structures are conventionally proposed as such a rack-pinion type power steering apparatus, they still have room for improvement in achieving downsizing and weight reduction of a vehicle and making the apparatus compact.

For example, each of Japanese Utility Model Laid-Open Nos. 55-114763 and 55-114764 discloses a structure in which a sleeve constituting the outer valve member of a rotary type channel selector valve is integrally connected to and formed on a pinion shaft having pinion teeth that mesh with the rack teeth of a rack in order to simplify the arrangement of the entire apparatus, reduce the number of constituent components, and further decrease the size of the entire apparatus and to simplify the working and assembly operations.

In the former conventional case, a pinion shaft integrally connected to a sleeve is radially supported by a steering body with rolling bearings, e.g., a ball bearing and a needle bearing, formed on the two end portions of the pinion shaft. The valve housing portion can be integrally formed with the steering body. A stub shaft having a rotor pivotally disposed on the inner circumferential portion of the sleeve is radially supported by a ball bearing held by a plug member disposed at the open end of the valve housing.

In the latter conventional case, the two end portions of the pinion teeth of the pinion shaft are radially supported by a steering body with rolling bearings, e.g., a ball bearing and a needle bearing. A stub shaft connected to a rotor is rotatably supported by a ball bearing held by a body portion (although this body portion is shown as an integral member in the drawings, it is divisionally formed in practice) which is integral with the steering body.

In a conventional rack-pinion type power steering apparatus, a pinion shaft and a sleeve constituting the outer valve member of a rotary type channel selector valve are integrally formed, as described above.

However, the conventional apparatus with this structure has a problem in the structure wherein the stub shaft, having a rotor inserted in the sleeve and relatively, rotatably displaceable, is radially supported in the steering body. Therefore, the conventional apparatus is not sufficient in achieving a smooth valve action, and it is desired that any countermeasure be taken.

This problem will be described in more detail. In the conventional case described above, the stub shaft having the rotor is pivotally, radially supported through a plug member engaging with the steering body or a bearing, e.g., a ball bearing, directly held by the body, not through the radial support portion that radially supports the pinion shaft integrally formed with the sleeve on the steering body. In order to obtain a smooth valve action with this arrangement, very high radial support precision is required.

In practice, however, it is impossible to cope with this demand. More specifically, when this structure is employed, the bearing radially supporting the stub shaft must have a bearing gap smaller than the valve clearance and must maintain strict concentricity allowed as it is formed on a member separate from the sleeve. It is almost impossible to achieve this demand.

In particular, in the rotary type channel selector valve arranged between the sleeve and rotor described above, the rotor integrally connected to the stub shaft of the steering wheel and the sleeve integrally connected to the pinion shaft of the steering wheel must be combined such that they can concentrically, rotatably displace relative to each other and be disposed in the valve housing. This is because the oil pump serving as the fluid pressure generating source, the oil tank, the inlet port and the return port communicating with the left and right cylinder chambers constituting the power cylinder, and the channels serving as the right and left output ports are connected to each other by selectively connecting and disconnecting a plurality of channel grooves radially formed in the outer circumferential surface of the rotor and the inner circumferential surface of the sleeve to and from each other by relative rotational displacement between the rotor and sleeve, thereby selecting the channels of the fluid pressure circuit (hydraulic circuit).

In the conventional rack-pinion type power steering apparatus described above, when the sleeve is integrally connected to the pinion shaft, it is difficult to obtain a smooth rotational displacement between the sleeve and the rotor integrally connected to the stub shaft, and a smooth valve action is hindered accordingly. A countermeasure that can solve this problem is therefore sought for.

In a conventional rack-pinion type power steering apparatus, problems in workability and assembly are posed by a portion for incorporating each constituent component in the steering body and a structure of each constituent component which is to be incorporated.

In particular, in the conventional apparatus, the stub shaft is relatively pivotally connected to the pinion shaft through the torsion bar, and the pinion shaft, the torsion bar, and the stub shaft are sequentially incorporated in the incorporating space formed in the steering body. Appropriate portions are pivotally supported through bearing members such as ball bearings or needle bearings.

In this conventional structure, the two end portions of the pinion shaft, the insertion portion of the stub shaft which is to be inserted into the steering body, and the two end portions (two end portions of a sleeve) of a rotary type channel selector valve constituted by the sleeve serving as an outer valve member and a rotor serving as an inner valve member, the sleeve and the rotor being disposed at opposing end portions of the pinion shaft and the stub shaft, are radially supported in the steering body through the bearing members. With this structure, an incorporating space having two ends open to the steering body is formed, and the pinion shaft, the stub shaft, the torsion bar, and the valve members constituted by the sleeve and the rotor are incorporated together with the bearing members.

In this structure, however, holes must be formed from the two sides to form the incorporating space in the steering body. This poses a problem in workability. In addition, good concentricity cannot be achieved in the respective parts constituting this space. The incorporating operation of each constituent component to be incorporated in this space is cumbersome. In addition, it is difficult to maintain good concentricity of the respective constituent components.

### Summary of the Invention

The present invention has been made in view of the above situation, and has as its object to provide a rack-pinion type power steering apparatus in which axial support structures for a pinion shaft integrally formed with the sleeve of a rotary type channel selector valve and for a stub shaft integrally having a rotor are improved, and the pinion shaft and the stub shaft are appropriately, coaxially supported to obtain relative rotational displacement, so that a smooth valve action can be obtained, thereby obtaining a smooth steering feeling.
The present invention has been made in view of the above situation, and has as its object to provide a rack-pinion type power steering apparatus capable of improving workability and assembly in consideration of the structure of an overall apparatus, assuring the concentric properties of the respective constituent components, and particularly, a rotor and a sleeve which constitute a rotary type channel selector valve, and making the apparatus structure simple and compact.
In order to achieve the above object, according to the present invention, there is provided a rack-pinion type power steering apparatus comprising a cylindrical stub shaft which rotates in a steering body upon a steering operation, a steering body upon a steering operation, a torsion bar having one end fixed at one end of said stub shaft and extending toward the other end of said stub shaft, a pinion shaft fixed to the other end of said torsion bar, a rotor arranged integrally to cover said torsion bar from said stub shaft along an extending direction of said torsion bar and a sleeve having one end integrally connected to said pinion shaft, extending from said pinion shaft along said stub shaft, and arranged around said rotor to constitute a rotary type channel selector valve between said rotor and said sleeve, said steering body has a stepped hole formed such that an inner diameter is gradually reduced stepwise from one end to the other end on a stub shaft side, said pinion shaft having said sleeve, said torsion bar, and said stub shaft having said rotor are incorporated in said stepped hole and are rotatably supported in said stepped hole at at least a plurality of portions, and a plug member is fixed at an open end of the stepped hole, said sleeve is formed straight and integrally so as to have a diameter substantially equal to a maximum diameter of said pinion shaft and said rotor is formed straight and integrally with said stub shaft so as to have a diameter substantially equal to that of said stub shaft, a bearing is arranged at either one of said two ends of said sleeve and a valve groove constituting said rotary type channel selector valve is formed at a portion between said sleeve and said rotor sandwiched between said two ends of said sleeve, wherein the pinion shaft is radially supported in said steering body through radial support portions at the two endportions of the sleeve.

### Brief Descriptions of the Drawings:

- Fig. 1: is a sectional view of an apparatus main body portion showing a rack-pinion type power steering apparatus according to an embodiment of the present invention;
- Fig. 2A: is a sectional view showing a stepped hole serving as the incorporating space of a steering body in Fig. 1;
- Fig. 2B: is a sectional view taken along the line II - II in Fig. 2A;

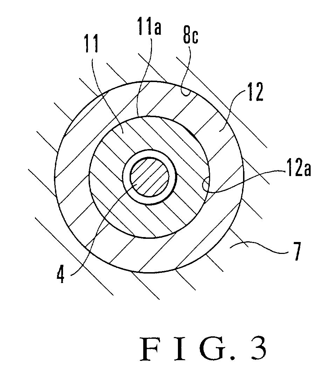

- Fig. 3: is a sectional view taken along the line III - III in Fig. 1;
- Fig. 4: is a sectional view of an apparatus main body portion showing a rack-pinion type power steering apparatus to another embodiment of the present invention;
- Fig. 5.: is a sectional view of an apparatus main body portion showing a modification of the rack-pinion type power steering apparatus shown in Figs. 1 and 4;
- Fig. 6: is a sectional view of an apparatus main body portion showing a rack-pinion type power steering apparatus according to still another embodiment of the present invention;

Fig. 7 is a sectional view of an apparatus main body portion showing a rack-pinion type power steering apparatus according to still another embodiment of the present invention;
Fig. 8 is a sectional view of an apparatus main body portion showing a modification of the rack-pinion type power steering apparatus shown in Fig. 6; and
Fig. 9 is a sectional view of an apparatus main body portion showing a rack-pinion type power steering apparatus according to still another embodiment of the present invention.

### Description of the Preferred Embodiments

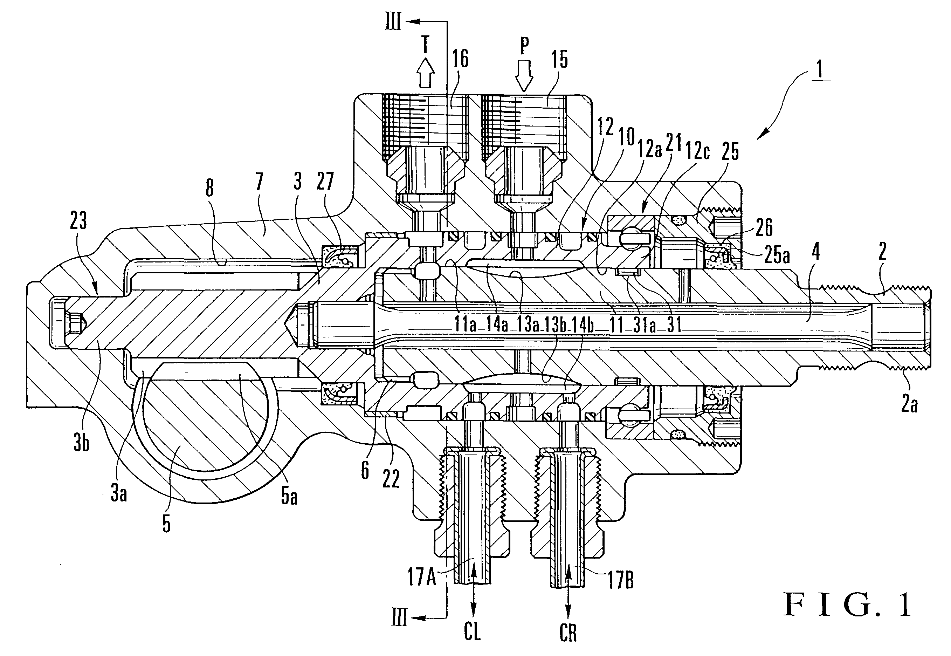

Fig. 1 shows a rack-pinion type power steering apparatus according to an embodiment of the present invention. In Fig. 1, reference numeral 1 denotes the power steering main body portion of the rack-pinion type power steering apparatus; 2, a cylindrical stub shaft serving as an input shaft connected to a steering wheel (not shown); 3, a pinion shaft; and 4, a torsion bar having one end fixed to one end of the stub shaft 2, extending toward the other end (to the left in Fig. 1) of the stub shaft 2, and connected to the pinion shaft 3 at its other end (inner end). A cylindrical rotor 11 is arranged to cover the torsion bar 4 along the extending direction of the torsion bar 4. Since it is integrally formed with the stub shaft 2, the rotor 11 is integrally connected to the stub shaft 2. A sleeve 12 is arranged around the rotor 11. The sleeve 12 has one end integrally formed with the pinion shaft 3 so that it is integrally connected to the pinion shaft 3. A rotary type channel selector valve 10 is formed between the rotor 11 and the sleeve 12. Pinion teeth 3a that mesh with rack teeth 5a on a rack 5 constituting a steering link mechanism (not shown) are formed on the pinion shaft 3.

Between the outer circumferential end of the rotor 11 away from the stub shaft 2 and the inner wall of the sleeve 12 near a portion integrally connected to the pinion shaft 3, a safety spline portion 6 constituted by projecting portions and groove portions is arranged as a fail safe mechanism that allows relative rotational displacement within a predetermined angular range caused by the torsion of the torsion bar 4.

The torsion bar 4 has the inner end pressed into and fixed with the pinion shaft 3 and an outer end extending through the stub shaft 2 to the outer end (right end) of the stub shaft 2. The stub shaft 2 is integrally connected to the torsion bar 4 at its serrated portion 2a to be coupled to the stub shaft 2 on the steering wheel side, through a welding means by, e.g., welding the entire circumferential portion of the serrated portion 2a to the torsion bar 4.
Conventionally, this portion is connected by driving a connection pin. In contrast to this, when connection is performed by welding the entire circumferential portion of the serrated portion 2a in this manner, hole formation and pin driving become unnecessary, and moreover an O-ring serving as a seal member also becomes unnecessary.

Reference numeral 7 denotes a steering body constituting the power steering main body portion. The steering body 7 serves also as a valve housing for the rotary type channel selector valve 10 (to be described later). The stub shaft 2 and the pinion shaft 3 are rotatably supported by radial support portions where they are directly received by bearings (to be described later) and the steering body 7. Oil seals are interposed at appropriate positions of the stub shaft 2 and the pinion shaft 3.

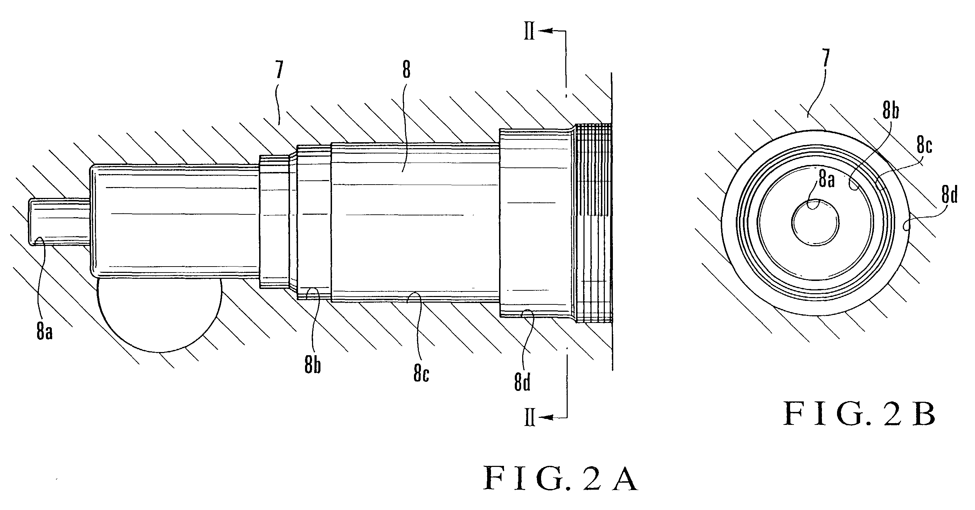

As shown in Figs. 2A and 2B, a space for incorporating the stub shaft 2, the torsion bar 4, and the pinion shaft 3 is formed in the steering body 7 so as to reduce the inner diameter stepwise from one end to the other end on the stub shaft 2 side.

An assembly constituted by the stub shaft 2 having the rotor 11, the torsion bar 4, and the pinion bar 3 having the sleeve 12 is incorporated in the stepped hole 8. The three portions of the pinion shaft 3 are radially supported by a ball bearing 21, a bush 22, and the radial support portion for directly supporting the pinion shaft on the body 7, respectively. Therefore, the overall assembly can be pivotally supported.

Reference numeral 8a denotes a hole portion constituting an radial support portion 23 for radially supporting the distal end portion of the pinion shaft 3; 8b, a hole portion for radially supporting the bush 22; 8c, a hole portion for holding the sleeve 12 of the rotary type channel selector valve 10; and 8d, a hole portion for holding the ball bearing 21. The hole portion 8a is formed by the stepped hole, so that the inner diameter gradually increases from the hole portion 8a.

According to the present invention, in particular, the stepped hole 8 serving as the incorporating space is formed from one side of the steering body 7. The hole portions having different diameters can be formed to maintain perfect concentricity with high precision. In addition, working is also simple. The constituent components are incorporated in the assembled state in the stepped hole 8 open in one direction. Therefore, the assembly can be facilitated. In the assembled state, good concentricity of the respective components can be maintained.

The diameter of the hole portion 8b for holding the bush 22 is slightly smaller than that of the hole portion 8c for holding the sleeve 12 of the selector valve 10 due to the following reason. In incorporating the assembly, the inner surface of the hole portion 8c which rotatably holds the sleeve 12 constituting the selector valve 10 can be prevented from being damaged by the bush 22. If such a problem is not posed, the diameters of the hole portions 8b and 8c may be equal to each other.

With the above structure, the components to be incorporated in the steering body 7, and particularly, the rotor 11 and the sleeve 12 constituting the rotary type channel selector valve 10 are excellent in concentricity. Without requiring special working precision, the function of the valve mechanism can be enhanced.

When the rotor 11 and the sleeve 12 are formed straight so as to have the same diameters as those of the shafts 2 and 3, the radial size of the portion in which the valve mechanism is incorporated can be made small.

In this steering body 7, the inner end portions of the shafts 2 and 3 are integrally connected to the rotor 11 and the sleeve 12, respectively, constituting the rotary type channel selector valve 10. The rotor 11 and the sleeve 12 are combined such that they can rotatably displace relative to each other through the torsion bar 4, and are incorporated in an incorporating space 8 of the valve housing portion of the steering body 7. Channel selection between an oil pump P or an oil tank T (neither are shown) and right and left cylinder chambers CR and CL of the power cylinder is performed by relative rotational displacement of the rotor 11 and the sleeve 12, as is known widely.

The arrangement of the rotor 11 and the sleeve 12 constituting the rotary type channel selector valve 10, and the arrangement of the hydraulic circuit of the valve housing portion (body 7) are identical or similar to those widely known. A plurality of channel grooves are formed at predetermined intervals in the radial direction as valve grooves 13a and 13b and valve grooves 14a and 14b in outer and inner circumferential surfaces 11a and 12a, respectively, of the rotor 11 and the sleeve 12 that oppose and are in slidable contact with each other. A plurality of fluid supply holes and fluid discharge holes are formed in appropriate portions of the outer and inner circumferential surfaces 11a and 12a, respectively, of the rotor 11 and the sleeve 12 by boring. When these channel grooves and the like are selectively connected and disconnected, the hydraulic circuit is selectively controlled as required.

In Fig. 1, reference numeral 15 denotes an inlet port through which the hydraulic oil flows from the oil pump P; 16, a return port 16 through which the hydraulic oil returns to the oil tank T; and 17A and 17B, left and right output ports connected to the left and right cylinder chambers CL and CR, respectively, of the power cylinder. When the rotary type channel selector valve 10 (described above) rotationally displaces upon the steering operation, the hydraulic channels among these ports are arbitrarily connected and disconnected, thereby controlling generation of an auxiliary steering force in the power cylinder (not shown), as is known widely.

In this embodiment, the sleeve 12 constituting the rotary type channel selector valve 10 is integrally formed on the pinion shaft 3. The pinion shaft 3 is radially supported by the steering body 7 at the two end portions of the sleeve 12 through a ball bearing 21 serving as a rolling bearing and a bush 22.

According to this embodiment, a small-diameter distal end portion 3b of the pinion shaft 3 is axially supported by an radial support portion 23 which is a recess formed in the steering body 7. The bearing gap between the radial support portion 23 and the pinion shaft 3 is within the allowable bending stress of the pinion shaft 3 and slightly larger than the bearing gap between the pinion shaft 3 and the radial support portions constituted by the ball bearing 21 and the bush 22 at the two end portions of the sleeve 12.

The ball bearing 21 described above has an inner ring constituted by a small-diameter cylindrical portion 12c formed at the end portion (on the stub shaft 2 side) of the sleeve 12 integral with the pinion shaft 3, and is constituted by a combination of a ball and an outer ring. In Fig. 1, reference numeral 25 denotes a plug member incorporated in the steering body 7 to engage with the open end of the incorporating space 8. The inner end of the plug member 25 abuts against the outer ring of the ball bearing 21, so that it is locked between the ball bearing 21 and the stepped portion of the steering body 7.

The plug member 25 is formed with an opening that holds the stub shaft 2 extending through the opening. A holding groove 25a for holding an oil seal 26 is formed in the plug member 25. The stub shaft 2 is rotatably inserted into the steering body 7 through the oil seal 26, and is sealed by the oil seal 26. Another oil seal 27 is disposed also at a portion of the pinion shaft 3 nearer the pinion teeth 3a than the bush 22. A working fluid is filled between the oil seals 26 and 27. Since the bush 22 is arranged in this working fluid, it has excellent bearing performance and excellent durability.

With the arrangement described above, since the pinion shaft 3 is radially supported by the steering body 7 through the radial support portions (21, 22) at the two end portions of the sleeve 12 which pose the serious problem in the valve action, deformation of the sleeve 12 at these portions is small and the valve action is smooth, thereby obtaining a smooth steering feeling. In particular, even if a light load such as a bending force acts on the pinion shaft 3, no bending deformation occurs in the sleeve 12, and the valve action of the rotary type channel selector valve 10 for obtaining an auxiliary steering force can be performed smoothly.

With the arrangement described above, even if a large load acts on the pinion teeth 3a of the pinion shaft 3, an influence on the sleeve 12 can be reduced, and the valve action at the sleeve 12 can be performed smoothly regardless of whether the load acts on the pinion teeth 3a.

Since the sleeve 12 constituting the rotary type channel selector valve 10 is integrally connected to the pinion shaft 3, the number of constituent components is small, and the number of portions to be worked is small, so that working and assembly operations are facilitated and the structure of the apparatus becomes simple. With this arrangement, a backlash that poses a problem during operation does not occur between the pinion shaft 3 and the sleeve 12, and the rigidity becomes excellent. Furthermore, in the conventional general apparatus structure, the sleeve 12 is formed as a separate member and is connected to the pinion shaft 3. Then, the size of the sleeve 12 and the pinion shaft 3 as a whole increases in the radial direction due to the presence of a connecting portion. Since the valve housing portion is formed separately from the steering body 7, the number of components increases, and the working and assembly operations become cumbersome. However, with the arrangement described above, these problems do not occur.

In particular, since the incorporating space 8 in the steering body 7 where the pinion shaft 3 and the stub shaft 2 are incorporated can be formed to open only on the stub shaft 2 side and such that its diameter decreases stepwise toward its distal end, its inner diameter can be worked by one-directional boring. Also, the assembly operation can be performed easily by incorporating, mounting, and pressing the pinion shaft 3 and the stub shaft 2 from one direction. Therefore, automatic assembly is possible. More specifically, in this embodiment, the incorporating space 8 can be formed by boring the steering body 7 from one side, and the concentricity of the members incorporated in the incorporating space 8 can be maintained, facilitating the assembly.

In this embodiment, as described above, since the sleeve 12 is integrally formed on the pinion shaft 3 and the sleeve 12 is formed to have the same diameter as that of the large-diameter portion of the pinion shaft 3, the steering body 7 and the valve body can be integrally formed, and a reduction in size can be achieved. With this straight structure constituted by the pinion shaft 3 and the sleeve 12, the rotor 11 to be incorporated in this straight structure can be formed straight to have the same diameter as that of the stub shaft 2, thereby improving the workability of the stub shaft 2.

As described above, since the distal end portion 3b of the pinion shaft 3 is radially supported by the radial support portion 23 having a bearing gap slightly larger than that of the radial support portions (21, 22) described above, a large support strength can be maintained over the entire pinion shaft 3, and no problem occurs in the durability.

In particular, in this arrangement, the pinion shaft 3 integrally formed with the sleeve 12 is supported at three apparent points, i.e., the two radial support portions (21, 22) at the two ends of the sleeve 12 and the radial support portion 23 of the distal end portion 3b of the pinion shaft 3. In practice, however, when, for example, the acting load is small, the pinion shaft 3 is supported at two points, i.e., at the two ends of the sleeve 12. Therefore, the valve action in travel particularly along an almost straight road can be performed smoothly.

Since the bearing gap of the radial support portion 23 at the distal end portion 3b of the pinion shaft 3 is large and the degree of freedom in elasticity at the pinion teeth 3a is large, when the pinion teeth 3a mesh with the rack teeth 5a, even if the gear working precision is poor, this poor working precision can be absorbed. Since the rack teeth 5a and the pinion teeth 3a can mesh smoothly, a smooth steering feeling can be obtained. Since the meshing gap occurring due to the gear precision is not backlash among the constituent components, knocking does not occur in steering and kicking back.

Since the radial support portion 23 at the distal end portion 3b of the pinion shaft 3 functions only when a large load acts, which does not much influence the steering feeling, even if the pinion shaft 3 is received not by a comparatively expensive needle bearing but directly by a bush or the steering body 7, the steering feeling does not suffer.

According to the present invention, the rotor 11 is fitted and inserted in the inner circumferential surface 12a of the sleeve 12 integral with the pinion shaft 3 described above to be integral with the stub shaft 2, so that it is directly, radially supported. A needle bearing 31 serving as a rolling bearing is interposed at the end portion, on the stub shaft 2 side along the axis of the valve grooves 13a and 13b, and the valve grooves 14a and 14b, of the outer circumferential surface 11a of the rotor 11 that serves as a slidable contact surface with respect to the sleeve 12. In this embodiment, this needle bearing 31 is disposed at a portion corresponding to the small-diameter cylindrical portion 12c constituting the ball bearing 21. Reference numeral 31a denotes an annular groove formed in the rotor 11.

With this arrangement, the rotor 11 and the sleeve 12 can be rotatably supported by the steering body 7 while the concentricity between them is maintained. The valve action can be made smooth with the needle roller of the needle bearing 31 described above, thereby improving the steering feeling. These advantages are obvious from the following fact. Even if an external force acts on the pinion shaft 3 or the stub shaft 2, decentering does not occur at the rotary type channel selector valve 10 constituted by the rotor 11 and the sleeve 12 because of the presence of the needle bearing 31, and stable rotational displacement can be obtained. Since a bearing, e.g., a conventional ball bearing, is not used, high working precision is not required, working is facilitated, and the cost is low.

When these radial support structures for the rotor 11 and the sleeve 12 are to be employed, if the slidable contact surface of either the rotor 11 or sleeve 12 is subjected to friction decreasing treatment, the valve action can be made smooth more effectively. As such friction decreasing treatment, for example, low-temperature sulfuric acid treatment, manganese phosphate treatment, gas soft nitriding treatment, Teflon dispersion type electroless nickel-phosphorus composite plating, molybdenum disulfide baking, Teflon coating, and plasma-CVD ceramic-based hard film treatment are possible, and either one of them may be performed.

After the friction decreasing treatment is performed, a treatment for improving the plateau rate of the slidable contact surfaces may be performed. As this post-treatment, inner-diameter roller burnishing, outer-diameter roller finishing, buffing, or the like is possible in accordance with the treatment described above.

In this embodiment, in the power steering main body portion 1 of the rack-pinion type power steering apparatus, the stub shaft 2 and the torsion bar 4 are connected to each other by welding, e.g., TIG welding, after valve centering is performed, as described above. Therefore, the following advantages are obtained. If a connecting pin is used, as in the conventional case, centering of the stub shaft 2 and the torsion bar 4 can be performed easily as compared to a case wherein a boring pin driving operation is performed, and the valve action becomes smoother. Conventionally, valve centering is performed after component assembly while introducing a hydraulic pressure. However, with the structure of this embodiment, valve centering is preferably performed with a pneumatic pressure. Then, the working fluid will not burn during welding, and a conventional oil extracting operation after centering becomes unnecessary. Since entire circumferential welding is performed, an O-ring becomes unnecessary, and the problem of torsion of the torsion bar 4 caused by the torsional force of the O-ring during centering, thus causing decentering, is eliminated.

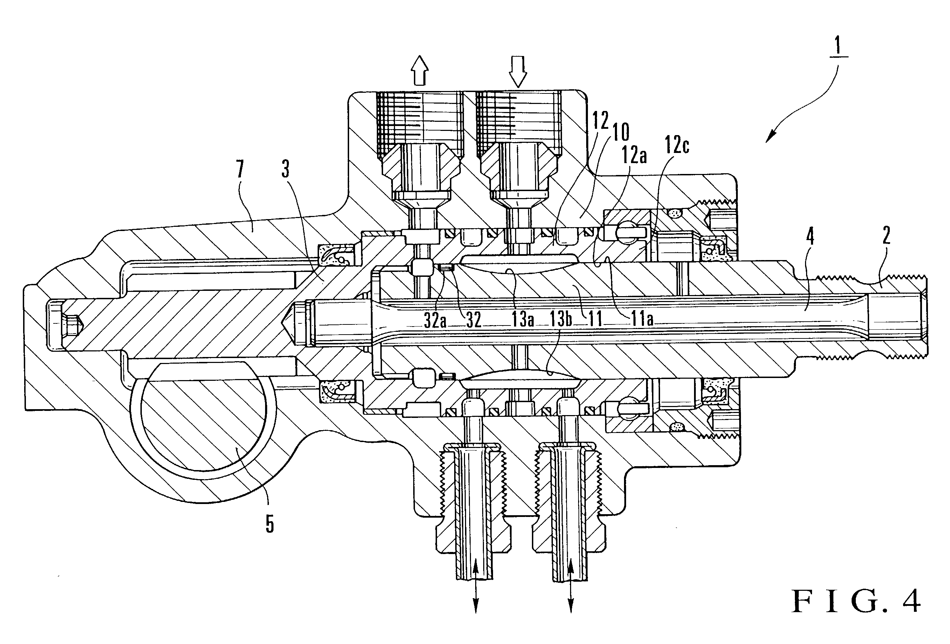

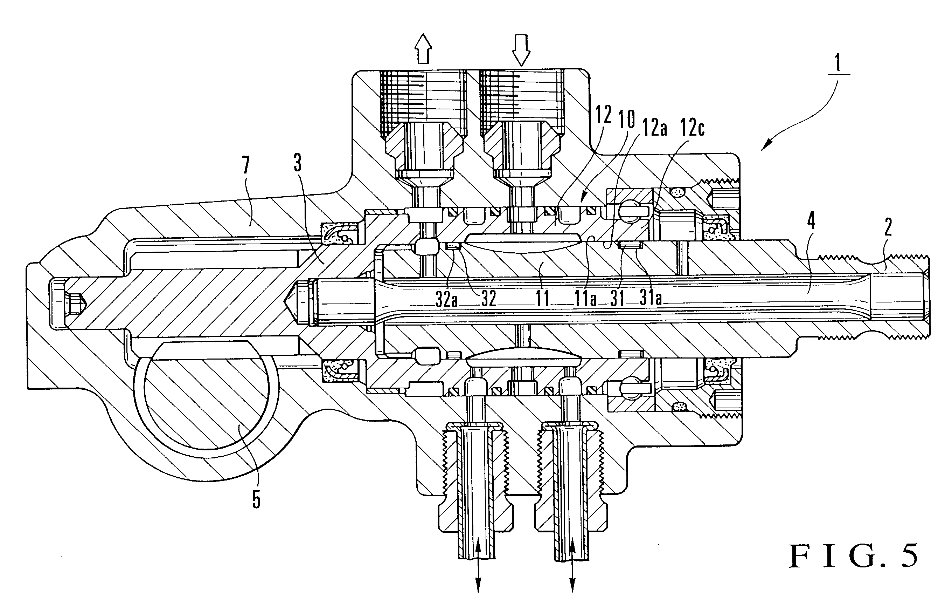

In the embodiment described above, in the rotary type channel selector valve 10 constituted by the rotor 11 and the sleeve 12, the groove 31a is formed in the end portion, on the stub shaft 2 side, of the valve grooves 13a and 13b of the outer circumferential surface 11a serving as the slidable contact surface of the rotor 11, and the needle bearing 31 is disposed at this portion. However, the present invention is not limited to this. For example, as shown in Fig. 4, opposite to the above description, a groove portion 32a may be formed at portions corresponding to the end portions of a sleeve 12 and a rotor 11 on the left side of valve grooves 13a and 13b, and a needle bearing 32 may be disposed at this portion. Alternatively, as shown in Fig. 5, needle bearings 31 and 32 may be disposed at portions corresponding to the two opposite end portions of each of a sleeve 12 and a rotor 11.

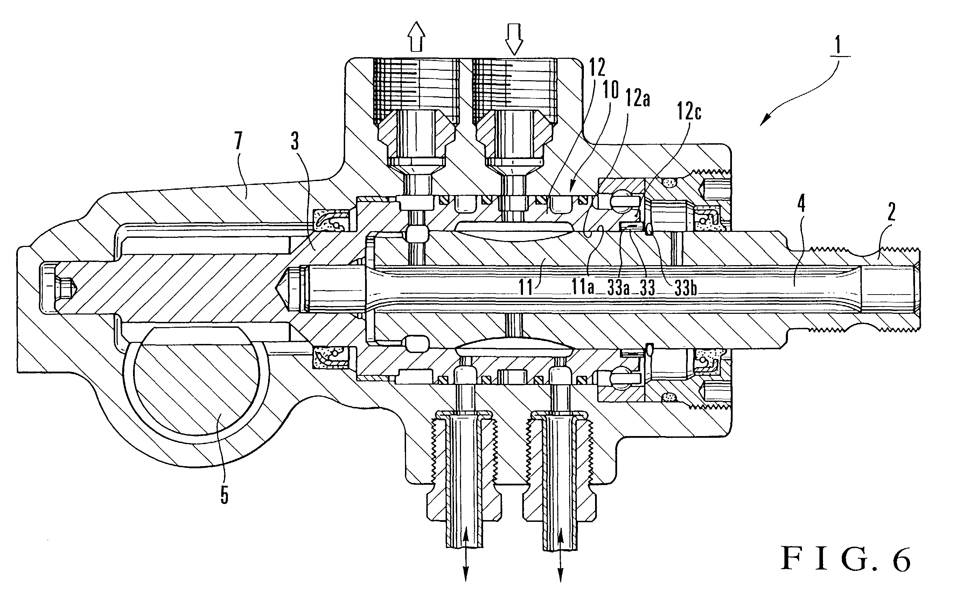

Furthermore, as shown in Fig. 6, on an inner circumferential surface 12a of a sleeve 12, a groove portion 33a may be formed inside a small-diameter cylindrical portion 12c constituting a ball bearing 21, and a needle bearing 33 may be disposed at this portion or at an opposite end portion (not shown). In the case shown in Fig. 4, the groove portion 33a may be formed to open in the end portion of the sleeve 12, and a locking ring, e.g., a snap ring 33b, may be mounted on the sleeve 12 or a stub shaft 2 through a plate to prevent the sleeve 12 from coming off.

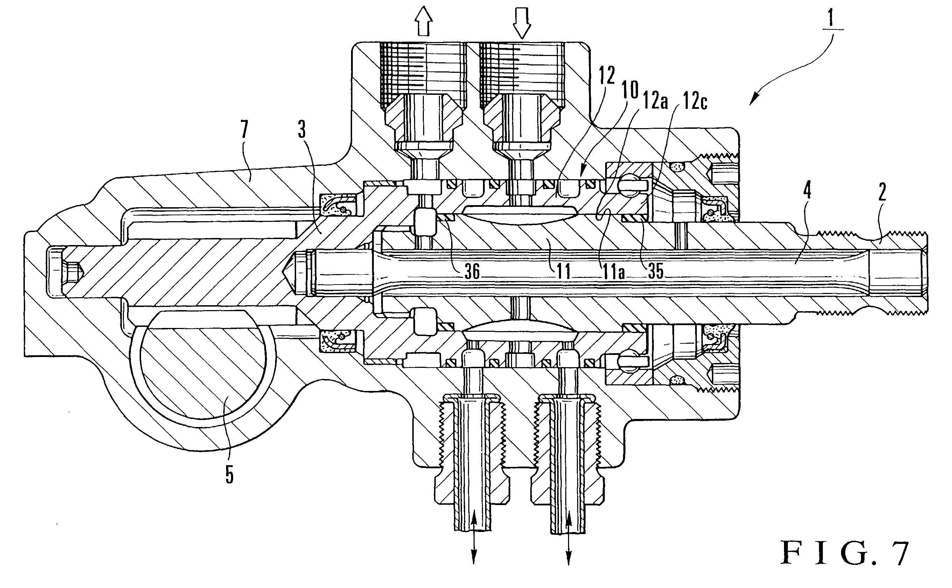

In the embodiment described above, as the bearing disposed between the slidable contact surfaces of the rotor 11 and the sleeve 12, the needle bearing 31, 32, or 33 serving as a rolling bearing is disposed. However, the present invention is not limited to this. Bushes 35 and 36 serving as slide bearings may be disposed at the two end sides of the rotor 11 in the axial direction of valve grooves 13a and 13b, i.e., at the opposite end portions of portions corresponding to a sleeve 12 and the rotor 11, as shown in Fig. 7. When this arrangement is employed, after these bushes 35 and 36 are added, they may be finished while outer-diameter cutting of the rotor 11 is performed.

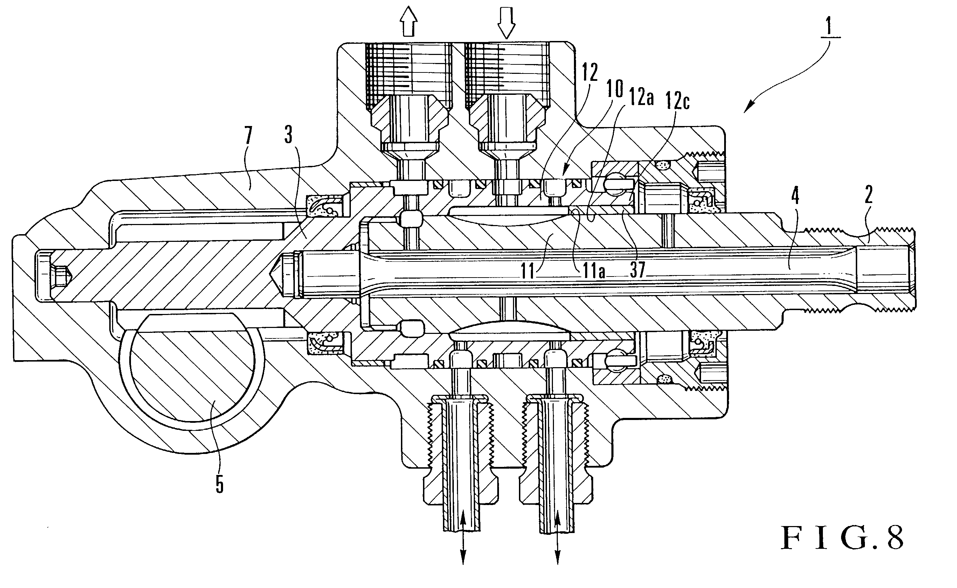

Fig. 8 shows a case wherein a bush 37 is mounted on the inner circumferential portion of the end portion, on the stub shaft 2 side, of a sleeve 12. When the inner diameter of the sleeve 12 is subjected to cutting, this bush 37 can be finished simultaneously. As a modification of this, a groove for fitting the bush 37 therein may be worked simultaneously with valve grooves 14a and 14b, so that the bush 37 functions also as a stop-off ring that blocks the working fluid.

In the cases of Figs. 8 and 7 described above, since finishing is performed simultaneously when inner-diameter finishing of the valve is performed, the number of working steps decreases, and high precision can be obtained.

The present invention is not limited to the structures described in the above embodiments, but the shape, structure, and the like of the respective portions of the power steering main body portion 1 of the rack-pinion type power steering apparatus can, within the scope of the appended claims, be modified and changed as required, as a matter of course. More specifically, in the embodiments described above, the rack-pinion type power steering apparatus is entirely examined, and the structure is simplified, the workability and the assembly are facilitated, and the cost is reduced. However, the present invention is not limited to this.

For example, the structure or the support structure of the stub shaft 2 and the rotor 11 constituting the rotary type channel selector valve 10, the shape and structure of the valve grooves and the fluid pressure channels of the rotary type channel selector valve 10 constituted by the rotor 11 and the sleeve 12, the rack 5, the support structure of the rack 5, and the like may be changed as required.

The ball bearing 21 using the sleeve 12 as the inner ring constitutes the radial support portion at the end portion of the sleeve 12 on the steering wheel side of the pinion shaft 3 shown in Fig. 1. However, the present invention is not limited to this, and a ball bearing whose inner ring is integrally fixed on the sleeve by a locking means, e.g., a snap ring, may be used. The radial support portion at the axial center located on the sleeve 12 of the pinion shaft 3 on the pinion teeth 3a side is not limited to the bush 22, but may employ a bearing structure in which this axial center is directly received by a needle bearing or the steering body 7. The radial support portion 23 nearer the distal end portion 3b of the pinion shaft 3 than the pinion teeth 3a constitutes a bearing structure directly received by the body 7. However, this portion may constitute a bearing structure employing a bush or a needle bearing.

The distal end portion 3b located on the distal end side more than the pinion teeth 3a of the pinion shaft 3 of Fig. 1 may be formed with, e.g., a straight shape, a tapered shape in which the distal end is slightly so thin as to avoid striking of the distal end edge, or a curved shape in which the central portion is slightly thick.

Furthermore, the inner-diameter shape of the incorporating space 8 for the pinion shaft 3 of the steering body 7 and for the stub shaft 2 having the rotor 11 may be sequentially, monotonously enlarged toward the open end of the stub shaft 2, and the components to be incorporated in the incorporating space 8 may be incorporated through this opening. The plug member 25 which is fixed in this open end by screwing is formed with a holding groove for the oil seal 26 that seals the stub shaft 2, and another oil seal 27 is also held by the portion of the sleeve 12 nearer the pinion teeth 3a than the radial support portion on the pinion teeth 3a side.

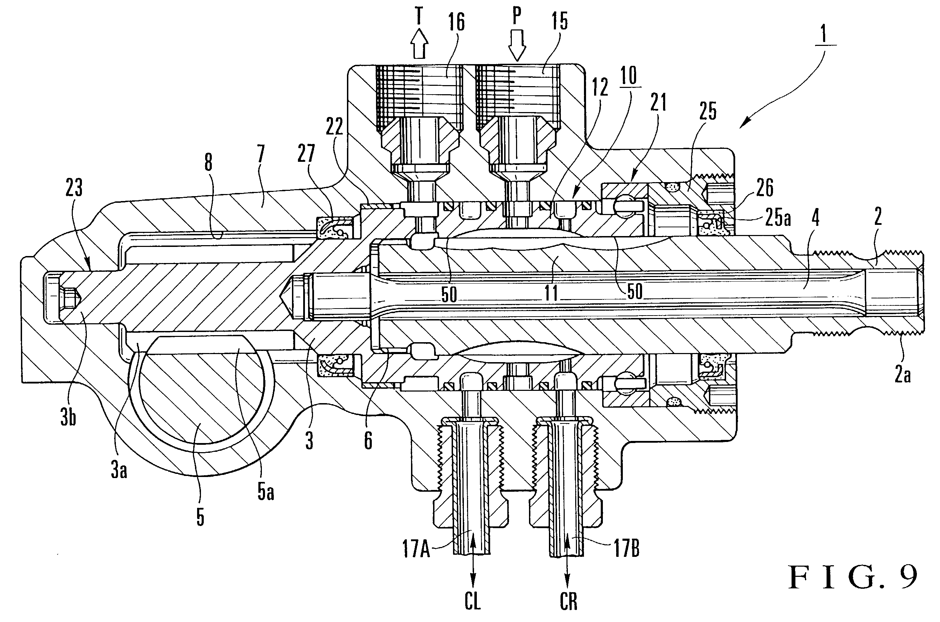

Fig. 9 shows a rack-pinion type power steering apparatus according to still another embodiment of the present invention, in which the components identical to those in Fig. 1 are denoted by the same reference numerals. This embodiment is different from that in Fig. 1 in that the rolling bearing formed between one end of the sleeve 12 and the opposing rotor 11 in Fig. 1 is omitted in Fig. 9, and surfaces 50 that have undergone friction decreasing treatment are formed on the entire slide surfaces of a sleeve 12 and a rotor 11.

More specifically, in this embodiment, one (particularly, the inner circumferential surface of the sleeve 12) or both of the inner and outer circumferential slidable contact surfaces of the rotor 11 and sleeve 12 are subjected to friction decreasing treatment. As such friction decreasing treatment, for example, either one of low-temperature sulfuric acid treatment, manganese phosphate treatment, gas soft nitriding treatment, Teflon dispersion type electroless nickel-phosphorus composite plating, molybdenum disulfide baking, Teflon coating, and plasma-CVD ceramic-based hard film treatment is possible. After the friction decreasing treatment is performed, a treatment for improving the plateau rate of the slidable contact surface may be performed. As this post-treatment, inner-diameter roller burnishing, outer-diameter roller finishing, buffing, or the like is possible in accordance with the treatment described above.

Among the friction decreasing treatments, the low-temperature sulfuric acid treatment is surface heat treatment for film formation capable of forming an FeS film thinner than that in a chemical reaction in a solution. This method is advantageous in that dimensional precision and shape precision can be easily improved, and the surface-precision level of the starting material can be maintained.

When this treatment is performed, the valve action becomes smooth, and the steering feeling can therefore be improved. In particular, these rotor 11 and sleeve 12 pivot relative to each other only through a small angle. If this surface treatment is performed, the cost is decreased when compared to a case wherein a separate bearing is arranged.

As has been described above, in the rack-pinion type power steering apparatus according to this embodiment, the rotor integrally formed on the stub shaft is fitted and inserted with the inner circumferential portion of the sleeve integrally formed on the pinion shaft, so that the rotor is held pivotally. A bearing is disposed at a portion of the slidable contact surface of either the rotor and the sleeve, at least at one of the two end portions in the axial direction across the valve grooves formed in these rotor and sleeve. Therefore, despite the simple arrangement, excellent effects as follows can be obtained.

According to this embodiment, since the sleeve integral with the pinion shaft radially supported by the steering body, and the rotor integral with the stub shaft fitted and inserted with the inner circumferential portion of the sleeve are directly, radially supported by a bearing which is formed at either one of the two ends in the axial direction of the valve grooves and which is interposed in part of the slidable contact surface of either one of the rotor and sleeve. Therefore, working precision at this radial support portion can be easily maintained, and the sleeve and the rotor can be radially supported to be rotatably displaceable relative to each other while the concentricity between them is maintained. With the rotary type channel selector valve having this structure, the valve action becomes smooth, so that the steering feeling can be improved.

According to this embodiment, since a bearing, e.g., a conventional ball bearing, that requires high working precision is not used, the arrangement of the respective portions is simplified, thus decreasing the cost.

According to this embodiment of the present invention, if the rotor integrally formed on the stub shaft is directly, radially rotatably supported and at least a slidable contact surface of either one of the sleeve and the rotor is subjected to friction decreasing treatment, despite the simple arrangement, a larger friction than necessary between the sleeve and the rotor can be decreased, so that the valve action becomes smooth and the steering feeling can be improved.

According to a rack-pinion type power steering apparatus of the present invention, the steering body has a stepped hole formed such that an inner diameter is gradually reduced stepwise from one end to the other end on a stub shaft side, and the pinion shaft having the sleeve, the torsion bar, and the stub shaft having the rotor are incorporated in the stepped hole and are rotatably supported in the stepped hole at at least a plurality of portions, and a plug member is fixed at an open end of the stepped hole, thereby obtaining an integral assembly structure. Good concentricity of components to be incorporated in the steering body and, particularly, the rotor and sleeve constituting the rotary type channel selector valve can be assured, and the function as the valve mechanism can be enhanced without requiring special working precision.

In addition, the rotor and the sleeve are integrally formed straight with respect to the corresponding shafts, thereby reducing the radial size of the valve mechanism portion.

## Claims

1. A rack-pinion type power steering apparatus **characterized by** comprising:
a cylindrical stub shaft (2) which rotates in a steering body (7) upon a steering operation;
a torsion bar (4) having one end fixed at one end of said stub shaft and extending toward the other end of said stub shaft;
a pinion shaft (3) fixed to the other end of said torsion bar;
a rotor (11) arranged integrally to cover said torsion bar (4) from said stub shaft (2) along an extending direction of said torsion bar (4);
a sleeve (12) having one end integrally connected to said pinion shaft (3), extending from said pinion shaft along said stub shaft (2), and arranged around said rotor to constitute a rotary type channel selector valve (10) between said rotor and said sleeve (12) and
said steering body (7) has a stepped hole (8) formed such that an inner diameter is gradually reduced stepwise from one end to the other end on a stub shaft side,
said pinion shaft (3) having said sleeve (12), said torsion bar (4), and said stub shaft (2) having said rotor (11) are incorporated in said stepped hole (8) and are rotatably supported in said stepped hole (8) at at least a plurality of portions, and a plug member (25) is fixed at an open end of the stepped hole (8),
said sleeve (12) is formed straight and integrally so as to have a diameter substantially equal to a maximum diameter of said pinion shaft (3), and
said rotor (11) is formed straight and integrally with said stub shaft (2) so as to have a diameter substantially equal to that of said stub shaft (2),
a bearing (31) is arranged at either one of said two ends of said sleeve (12), and
a valve groove (13a, 14a) constituting said rotary type channel selector valve (10) is formed at a portion between said sleeve and said rotor sandwiched between said two ends of said sleeve (12),
**characterised in that** the pinion shaft (3)is radially supported in said steering body (7) through radial support portions (21, 22) at the two end portions of the sleeve (12).

2. An apparatus according to claim 1, wherein at least two ends of an inner circumferential portion of said sleeve (12) integrally connected to said pinion shaft (3) have slidable contact surfaces that slidably support said rotor (11) integrally connected to said stub shaft (2).

3. An apparatus according to claim 1, wherein said bearing (31) comprises either one of a rolling bearing and a slide bearing.

4. An apparatus (31) according to claim 1, wherein said bearing (31) is arranged at least at either one of said slidable contact surfaces of said rotor and said sleeve.

5. An apparatus according to claim 1, wherein at least one of said slidable contact surface of said sleeve (12) and said rotor (11) forms a friction-decreased surface (50).

6. An apparatus according to claim 5, wherein said friction-decreased surface (50) is a surface formed by either one of low-temperature sulfuric acid treatment, manganese phosphate treatment, gas soft nitriding treatment, Teflon dispersion type electroless nickel-phosphorus composite plating, molybdenum disulfide baking, Teflon coating, and plasma-CVD ceramic-based hard film treatment.

7. An apparatus according to claim 1, wherein at least one of an inner circumferential surface of said sleeve (12) integrally connected to said pinion shaft (3) and a slidable contact surface of said rotor (11) integrally connected to said stub shaft (2) forms a friction-decreased surface (50).

8. An apparatus according to claim 7, wherein at least two ends of an inner circumferential portion of said sleeve (12) integrally connected to said pinion shaft (3) have slidable contact surfaces that slidably support said rotor (11) integrally connected to said stub shaft (2).

## Patentansprüche

1. Zahnstangen-Servolenkungsvorrichtung, **dadurch gekennzeichnet, daß** sie folgendes umfaßt:
eine zylindrische Flanschwelle (2), die sich bei einem Lenkvorgang in einem Lenkkörper (7) dreht;
einen Torsionsstab (4), von dem ein Ende an einem Ende der Flanschwelle befestigt ist und der sich zum anderen Ende der Flanschwelle erstreckt;
eine am anderen Ende des Torsionsschafts befestigte Ritzelwelle (3);
einen Rotor (11), der integral so angeordnet ist, **daß** er den Torsionsstab (4) entlang einer Erstreckungsrichtung des Torsionsstabs (4) von der Flanschwelle (2) abdeckt;
eine Hülse (12) mit einem integral mit der Ritzelwelle (3) verbundenen Ende, die sich von der Ritzelwelle entlang der Flanschwelle (2) erstreckt und so um den Rotor herum angeordnet ist, **daß** zwischen dem Rotor und der Hülse (12) ein Kanalwähldrehventil (10) gebildet wird, und wobei
der Lenkkörper (7) ein derart ausgebildetes abgestuftes Loch (8) aufweist, **daß** sich der Innendurchmesser auf der Flanschwellenseite schrittweise von einem Ende zum anderen Ende verringert,
die Ritzelwelle (3) mit der Hülse (12), der Torsionsstab (4) und die Flanschwelle (2) mit dem Rotor (11), welche in dem abgestuften Loch (8) enthalten sind und darin an mindestens mehreren Teilen drehbar gestützt werden und ein Steckglied (25) an einem offenen Ende des abgestuften Lochs (8) befestigt ist,
wobei die Hülse (12) gerade und integral so ausgebildet ist, **daß** ihr Durchmesser im wesentlichen gleich einem maximalen Durchmesser der Ritzelwelle (3) ist, und
wobei der Rotor (11) gerade und integral mit der Flanschwelle (2) so ausgebildet ist, **daß** sein Durchmesser im wesentlichen gleich dem der Flanschwelle (2) ist,
ein Lager (31) an einem der beiden Enden der Hülse (12) angeordnet ist und
eine das Kanalwähldrehventil (10) bildende Ventilnut (13a, 14a) an einem Teil zwischen der Hülse und dem Rotor zwischen zwei Enden der Hülse (12) ausgebildet ist,
**dadurch gekennzeichnet, daß** die Ritzelwelle (3) durch radiale Stützteile (21, 22) an den beiden Endteilen der Hülse (12) in dem Lenkkörper (7) radial gestützt wird.

2. Vorrichtung nach Anspruch 1, bei der mindestens zwei Enden eines Innenumfangsteils der integral mit der Ritzelwelle (3) verbundenen Hülse (12) gleitbare Kontaktflächen aufweisen, die den integral mit der Flanschwelle (2) verbundenen Rotor (11) gleitbar stützen.

3. Vorrichtung nach Anspruch 1, bei der das Lager (31) ein Rollenlager oder ein Gleitlager umfaßt.

4. Vorrichtung nach Anspruch 1, bei der das Lager (31) zumindest an einer der gleitbaren Kontaktflächen des Rotors und der Hülse angeordnet ist.

5. Vorrichtung nach Anspruch 1, bei der mindestens eine der gleitbaren Kontaktflächen der Hülse (12) und des Rotors (11) eine Fläche (50) mit verminderter Reibung bildet.

6. Vorrichtung nach Anspruch 5, bei der die Fläche (50) mit verminderter Reibung eine durch Tieftemperaturschwefelsäurebehandlung, Manganphosphatbehandlung, Gas-Weichnitrierbehandlung, stromloses Teflondispersions-Nickel-Phosphor-Verbundwerkstoff-Galvanisieren, Molybdändisulfidbrennen, Teflonbeschichtung und CVD-Plasma-Hartfilmbehandlung auf Keramikbasis gebildete Fläche ist.

7. Vorrichtung nach Anspruch 1, bei der die Innenumfangsfläche der integral mit der Ritzelwelle (3) verbundenen Hülse (12) und/oder eine gleitbare Kontaktfläche des integral mit der Flanschwelle (2) verbundenen Rotors (11) eine Fläche (50) mit verminderter Reibung bilden bzw. bildet.

8. Vorrichtung nach Anspruch 7, bei der mindestens zwei Enden eines Innenumfangsteils der integral mit der Ritzelwelle (3) verbundenen Hülse (12) gleitbare Kontakflächen aufweisen, die den integral mit der Flanschwelle (2) verbundenen Rotor (11) gleitbar stützen.

## Revendications

1. Appareil de direction assistée à crémaillère, **caractérisé en ce qu'**il comprend :
un arbre à bout cylindrique (2) qui tourne dans un corps de direction (7) au cours d'une opération de direction ;
une barre de torsion (4) ayant une extrémité fixée à une extrémité dudit arbre à bout et s'étendant vers l'autre extrémité dudit arbre à bout ;
un arbre de pignon (3) fixé à l'autre extrémité de ladite barre de torsion ;
un rotor (11) disposé intégralement de manière à couvrir ladite barre de torsion (4) depuis ledit arbre à bout (2) suivant une direction longitudinale de ladite barre de torsion (4) ;
un manchon (12) ayant une extrémité connectée intégralement audit arbre de pignon (3), s'étendant depuis ledit arbre de pignon le long dudit arbre à bout (2) et arrangé autour dudit rotor afin de constituer une soupape de sélecteur à canal de type rotative (10) entre ledit rotor et ledit manchon (12) et
ledit corps de direction (7) comprenant un trou étagé (8) formé de telle sorte qu'un diamètre intérieur soit progressivement réduit par échelons d'une extrémité à l'autre sur un côté de l'arbre à bout,
ledit arbre de pignon (3) ayant ledit manchon (12), ladite barre de torsion (4), et ledit arbre à bout (2) ayant ledit rotor (11), étant incorporés dans ledit trou étagé (8) et étant supportés à rotation dans ledit trou étagé (8), en au moins une pluralité de portions, et un organe de bouchon (25) étant fixé au niveau d'une extrémité ouverte du trou étagé (8),
ledit manchon (12) étant de forme droite et formé intégralement de manière à avoir un diamètre substantiellement égal à un diamètre maximal dudit arbre de pignon (3) et
ledit rotor (11) étant de forme droite et formé intégralement avec ledit arbre à bout (2) de manière à avoir un diamètre substantiellement égal à celui dudit arbre à bout (2),
un palier (31) étant disposé au niveau de l'une ou l'autre desdites deux extrémités dudit manchon (12), et
une rainure de soupape (13a, 14a) constituant ladite soupape de sélecteur à canal du type rotative (10) étant formée au niveau d'une portion entre ledit manchon et ledit rotor pris en sandwich entre lesdites deux extrémités dudit manchon (12),
**caractérisé en ce que** l'arbre de pignon (3) est supporté radialement dans ledit corps de direction (7) par le biais de portions de support radiales (21, 22) au niveau des deux portions d'extrémité du manchon (12).

2. Appareil selon la revendication 1, dans lequel au moins deux extrémités d'une portion circonférentielle interne dudit manchon (12) connectées intégralement audit arbre de pignon (3) ont des surfaces de contact coulissantes qui supportent à coulissement ledit rotor (11) intégralement connecté audit arbre à bout (2).

3. Appareil selon la revendication 1, dans lequel ledit palier (31) comprend l'un ou l'autre d'un palier à roulement et d'un palier coulissant.

4. Appareil selon la revendication 1, dans lequel ledit palier (31) est arrangé au moins au niveau de l'une ou l'autre desdites surfaces de contact coulissantes dudit rotor et dudit manchon.

5. Appareil selon la revendication 1, dans lequel au moins l'une desdites surfaces de contact coulissantes dudit manchon (12) et dudit rotor (11) forme une surface de frottement réduit (50).

6. Appareil selon la revendication 5, dans lequel ladite surface de frottement réduit (50) est une surface formée par l'un quelconque parmi un traitement à l'acide sulfurique à basse température, un traitement au phosphate de manganèse, un traitement de nitruration douce au gaz, un placage de composite nickel-phosphore autocatalytique de type dispersion de téflon, une cuisson au disulfure de molybdène, un revêtement de téflon, et un traitement en film dur à base de céramique à plasma déposé par voie chimique en phase vapeur.

7. Appareil selon la revendication 1, dans lequel au moins l'une d'une surface circonférentielle interne dudit manchon (12) intégralement connecté audit arbre de pignon (3) et d'une surface de contact coulissante dudit rotor (11) intégralement connecté audit arbre à bout (2) forme une surface à frottement réduit (50).

8. Appareil selon la revendication 7, dans lequel au moins deux extrémités d'une portion circonférentielle interne dudit manchon (12) intégralement connecté audit arbre de pignon (3) ont des surfaces de contact coulissantes qui supportent à coulissement ledit rotor (11) intégralement connecté audit arbre à bout (2).
